(19) Europäisches Patentamt / European Patent Office / Office européen des brevets

(11) **EP 4 097 566 B1**

(12) **EUROPEAN PATENT SPECIFICATION**

(45) Date of publication and mention
of the grant of the patent:
**24.07.2024 Bulletin 2024/30**

(21) Application number: **20758423.6**

(22) Date of filing: **10.08.2020**

(51) International Patent Classification (IPC):
**G06F 3/01** (2006.01)

(52) Cooperative Patent Classification (CPC):
**G06F 3/013**

(86) International application number:
**PCT/US2020/070388**

(87) International publication number:
**WO 2022/035458 (17.02.2022 Gazette 2022/07)**

(54) **SLIPPAGE RESISTANT GAZE TRACKING USER INTERFACES**

VERZÖGERUNGSBESTÄNDIGE BLICKVERFOLGUNGSBENUTZERSCHNITTSTELLEN

INTERFACES UTILISATEUR DE SUIVI DU REGARD RÉSISTANTES AU GLISSEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.12.2022 Bulletin 2022/49**

(73) Proprietor: **Google LLC**
**Mountain View, CA 94043 (US)**

(72) Inventor: **ABOUSSOUAN, Eric**
**Mountain View, California 94043 (US)**

(74) Representative: **Maikowski & Ninnemann**
**Patentanwälte Partnerschaft mbB**
**Postfach 15 09 20**
**10671 Berlin (DE)**

(56) References cited:
**US-A1- 2016 109 945**

• **KEN PFEUFFER ET AL: "Pursuit calibration", PROCEEDINGS OF THE 26TH ANNUAL ACM SYMPOSIUM ON USER INTERFACE SOFTWARE AND TECHNOLOGY, UIST '13, 8 October 2013 (2013-10-08), New York, New York, USA, pages 261 - 270, XP055202298, ISBN: 978-1-45-032268-3, DOI: 10.1145/2501988.2501998**
• **EDUARDO VELLOSO ET AL: "Motion Correlation", ACM TRANSACTIONS ON COMPUTER-HUMAN INTERACTION, ACM, NEW YORK, NY, US, vol. 24, no. 3, 28 April 2017 (2017-04-28), pages 1 - 35, XP058339261, ISSN: 1073-0516, DOI: 10.1145/3064937**
• **MELODIE VIDAL ET AL: "Pursuits", PROCEEDINGS OF THE 2013 ACM INTERNATIONAL JOINT CONFERENCE ON PERVASIVE AND UBIQUITOUS COMPUTING, UBICOMP '13, 8 September 2013 (2013-09-08), New York, New York, USA, pages 439, XP055292354, ISBN: 978-1-4503-1770-2, DOI: 10.1145/2493432.2493477**

**Description**

**FIELD**

This document relates, generally, to augmented reality (AR) and/or virtual reality (VR) environments, and, more particularly, to gaze tracking for interaction with features in AR and/or VR environments.

**BACKGROUND**

An (AR) and/or a (VR) system may generate a three-dimensional (3D) AR/VR environment. A user may experience this 3D AR/VR environment through interaction with various electronic devices, such as, for example, head mounted display (HMD) devices and/or heads up display (HUD) devices such as, for example, helmets, goggles, glasses and the like, gloves fitted with sensors, external handheld devices including sensors, and other such electronic devices. The user may move through the AR/VR environment, and may interact with objects, features, user interfaces and the like in the AR/VR environment using various input methods. For example, the user may interact with features in the AR/VR environment using external controllers, gesture inputs, voice inputs, gaze inputs including head gaze and eye gaze, and other such input methods. In some situations, particularly when gaze inputs are used to interact with features of the AR/VR environment, slippage and/or remount of the HMD may affect accuracy of detected gaze inputs. For example, a technique for performing gaze calibration is described in Ken Pfeuffer, Melodie Vidal, Jayson Turner, Andreas Bulling, and Hans Gellersen. 2013. Pursuit calibration: making gaze calibration less tedious and more flexible. In Proceedings of the 26th annual ACM symposium on User interface software and technology (UIST '13). Association for Computing Machinery, New York, NY, USA, 261-270. https://doi.org/ [link to http://dx.doi.org/10.1145/2501988.2501998] 10.1145/2501988.2501998.

Further relevant examples of prior art are:Eduardo Velloso, Marcus Carter, Joshua Newn, AugustoEsteves, Christopher Clarke, and Hans Gellersen. 2017. Motion Correlation: Selecting Objects by Matching Their Movement. ACM Trans. Comput.-Hum. Interact. 24, 3, Article 22 (June 2017), 35 pages. https://doi.org/10.1145/3064937OL, US201414894548A, and

Mélodie Vidal, Andreas Bulling, and Hans Gellersen. 2013. Pursuits: spontaneous interaction with displays based on smooth pursuit eye movement and moving targets. In Proceedings of the 2013 ACM international joint conference on Pervasive and ubiquitous computing (UbiComp '13). Association for Computing Machinery, New York, NY, USA, 439-448. https://doi.org/10.1145/2493432.2493477.

The invention is defined by the appended independent claims. Further embodiments are defined by the dependent claims.

The details of one or more implementations are set forth in the accompanying drawings and the description below. Other features will be apparent from the description and drawings, and from the claims.

**BRIEF DESCRIPTION OF THE DRAWINGS**

FIGs. 1A-1C illustrate example AR and/or VR systems.

FIG. 2 illustrates an example system for generating an AR and/or a VR environment, and interacting with the AR and/or VR environment.

FIG. 3 is a block diagram of an example electronic device for generating an AR and/or a VR environment, and interacting with the AR and/or VR environment, in accordance with implementations described herein.

FIG. 4 is a schematic diagram of an example eye gaze tracking system.

FIGs. 5A and 5B illustrate an example user interface employing a point gaze input mode.

FIGs. 6A-6C illustrate an example user interface employing an example gaze trajectory input mode, in accordance with implementations described herein.

FIGs. 7A-7G are schematic diagrams of an example user interface element trajectory and an example gaze trajectory, in accordance with implementations described herein.

FIG. 8 is a flowchart of a method of detecting a user gaze input, in accordance with implementations described herein.

FIG. 9 shows an example of a computer device and a mobile computer device that can be used to implement the techniques described herein.

**DETAILED DESCRIPTION**

A user may make use of numerous different input methods for interacting with features (i.e., virtual objects, virtual user interfaces (UIs), and the like) in an AR and/or a VR environment. Such input methods may include, for example, user inputs received at an external computing device (such as, for example, a handheld controller), gesture inputs, audible/voice inputs, gaze inputs (including, for example, head gaze inputs and eye gaze inputs), and the like. In some implementations, these input methods may be combined. A system and method, in accordance with implementations described herein, provide for user interaction with UIs in an AR and/or a VR environment using gaze input. The system and method, in accordance with implementations described herein, can account for slippage, or movement, or remount, of an HMD which may otherwise affect the accuracy of a gaze input directed to a UI in the AR/VR environment.

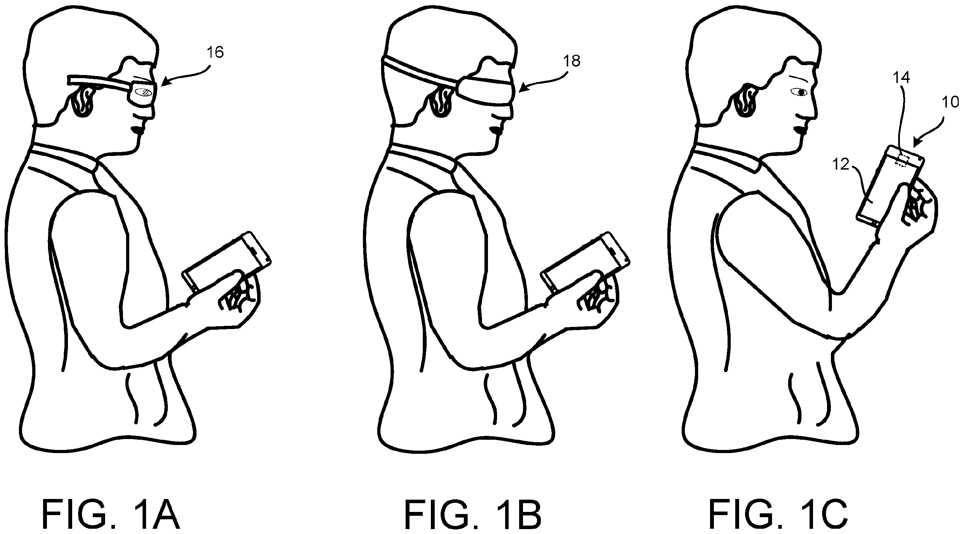

FIGs. 1A-1C illustrate various example electronic devices that can generate an AR and/or a VR environment through, for example, an application executed by the electronic device. As illustrated in the example shown in FIG. 1A, in some implementations, the user may view and experience the AR/VR environment via a display portion of a wearable device 16. In the example shown in FIG. 1A, the wearable device is a head mounted device 16, in the form of, for example, smart glasses. In this arrangement, the physical, real world environment may be visible to the user through the head mounted device 16, and virtual feature(s), object(s), UI(s) and the like may be placed in, or superimposed on the user's view of the physical, real world environment based. As illustrated in the example shown in FIG. 1B, in some implementations, the user may view and experience the AR/VR environment via a display portion of a head mounted device 18 which essentially occludes the user's direct visibility of the physical, real world environment. In this arrangement, an image of a model of the physical environment, or a pass through image of the physical environment, may be displayed on a display portion of the head mounted device 18, with virtual feature(s), object(s), UI(s) and the like placed in the AR/VR scene viewed by the user. As illustrated in the example shown in FIG. 1C, in some implementations, the user may view and experience the AR/VR environment on a display portion 12 of a handheld device 10. An imaging device 14 of the exemplary handheld device 10 may provide images for display of a camera view, or scene, of the physical, real world environment, together with virtual feature(s), object(s), UI(s) and the like placed in the camera view, or scene, of the physical, real world environment.

Reference will now be made in detail to non-limiting examples of this disclosure, examples of which are illustrated in the accompanying drawings. The examples are described below by referring to the drawings, wherein like reference numerals refer to like elements.

The handheld device 10 and the head mounted devices 16 and 18 illustrated in FIGs. 1A-1C are electronic devices having the capability to display virtual objects in an AR environment and/or a VR environment. Hereinafter, simply for ease of discussion and illustration, examples of a system and method, in accordance with implementations described herein, will be presented based on a scene as viewed on an electronic device similar to the exemplary head mounted device 16 illustrated in FIG. 1A. However, the principles to be described herein may be applied to other electronic device(s) and/or systems capable of generating and presenting an AR/VR environment in which the user can interact with virtual features, objects, UIs and the like using gaze inputs.

In some situations, when using a heads up display (HUD) device, or a head mounted display (HMD) device, such as the example HMD 16 shown in FIG. 1A, gaze tracking may provide advantages in detecting input and or interaction with features in an AR/VR environments and applications. For example, eye tracking may facilitate see and click actions, allowing a user to, for example, gaze on an object and blink to select the object. Additionally, eye tracking may provide for optimized rendering of high-definition (HD) content. For example, eye tracking may facilitate foveated rendering by rendering only parts of a scene in HD that are being focused on by the user, rather than rendering the entire scene in HD, thus reducing processing load. In some situations, eye tracking may be used to perform iris recognition as a part of a biometric system, both for user authentication and user identification. Slippage of the example HMD 16, or physical adjustment of the HMD 16, or removal/remounting of the HMD 16 on the head of the user, may disrupt the gaze tracking capability, and in particular, the eye tracking capability of the HMD 16, and may affect the accuracy of the corresponding user interaction with the selected virtual feature, object, UI and the like.

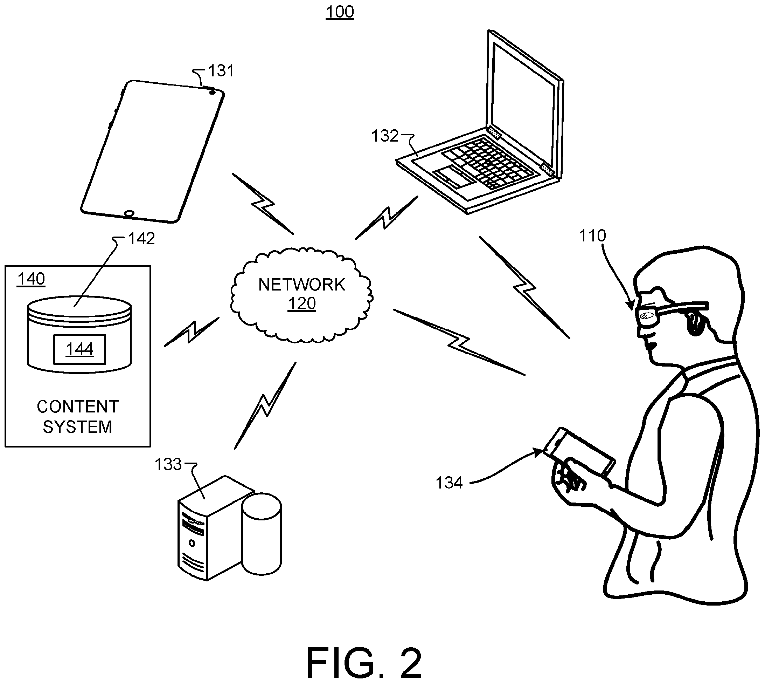

FIG. 2 illustrates an example system 100 for creating and interacting with a 3D AR and/or VR environment in accordance with the teachings of this disclosure is shown. In general, the system 100 provides the 3D AR/VR environment including content for user access, viewing, interaction and manipulation. The system 100 can provide the user with options for accessing the content, applications, objects, features and the like using, for example, gaze tracking, including eye tracking and/or head tracking. In the example shown in FIG. 2, the user is wearing an HMD 110, in the form of, for example, smart glasses, in which the physical environment is visible therethrough, and in which virtual features may be overlaid on the user's view of the physical environment to create an AR environment.

As shown in FIG. 2, the example system 100 may include multiple computing and/or electronic devices that can exchange data over a network 120. The devices may represent clients or servers, and can communicate via the network 120 or any other additional and/or alternative network(s). Example client devices include, but are not limited to, a mobile device 131 (e.g., a smartphone, a tablet computing device, a personal digital assistant, a portable media player, etc.),a laptop or netbook 132, a camera (not shown), the HMD 110 worn by the user in this example, a desktop computer 133, a handheld device 134, a gaming device (not shown), and any other electronic or computing devices that can communicate using the network 120 or other network(s) with other computing or electronic devices or systems, or that may be used to access virtual content or operate within the AR/VR environment. The devices 110 and 131-134 may represent client or server devices. The devices 110 and 131-134 can execute a client operating system and one or more client applications that can access, render, provide, or display VR content on a display device included in or in conjunction with each respective device 110 and 131-134. The devices 110 and 131-134 can execute VR applications that, among other things, take advantage of eye tracking carried out by the HMD 110 or other HMDs disclosed herein.

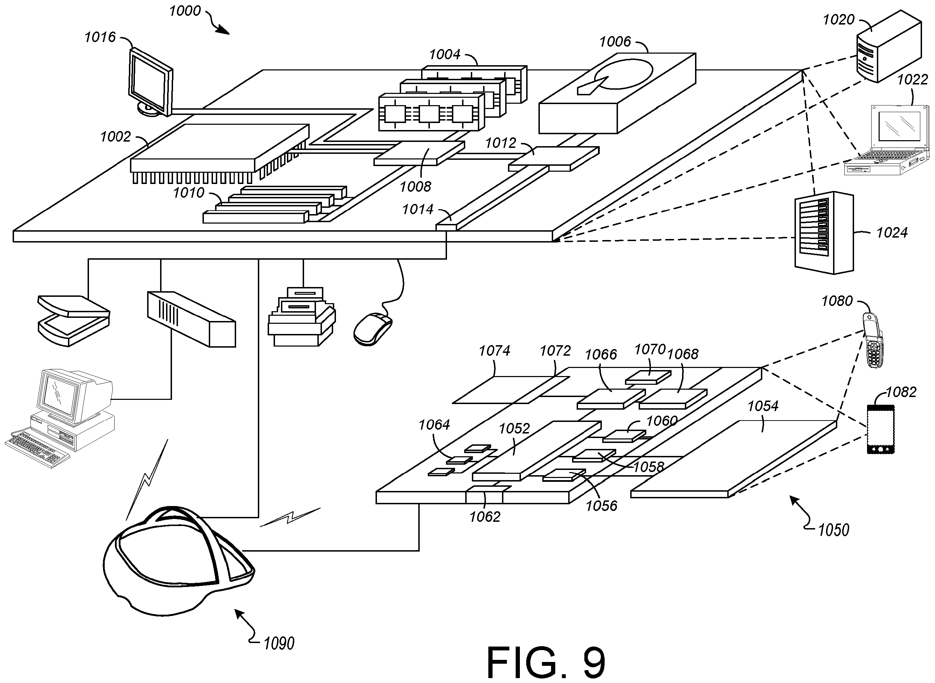

The system 100 may include any number of content systems 140 storing content and/or AR/VR software modules (e.g., in the form of AR/VR applications 144) that can generate, modify, or execute AR/VR scenes. In some examples, the devices 110 and 131-134 and the content system 140 include one or more processors and one or more memory devices, which can execute a client operating system and one or more client applications. The HMD 110, the other devices 131-133 or the content system 140 may be implemented by the example computing devices shown in FIG. 9.

The applications 144 can be configured to execute on any or all of devices 110 and 131-134. The HMD 110 can be connected to devices 131-134 to access AR/VR content on the content system 140, for example. Devices 131-134 can be connected (wired or wirelessly) to the HMD 110, which can provide content for display. A user's AR/VR system can be the HMD 110 alone, or a combination of devices 131-134 and the HMD 110.

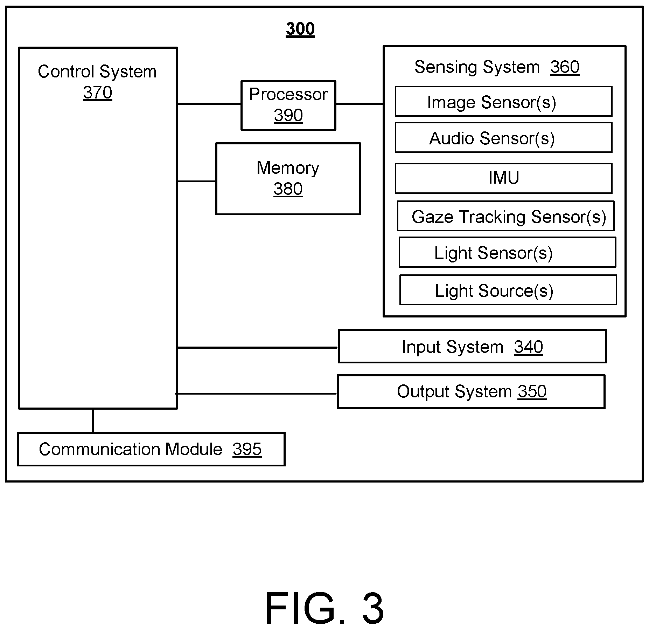

FIG. 3 is a block diagram of an example electronic device 300, such as, for example, the HMD 110 (in the form of, for example, smart glasses) worn by the user in FIG. 2, that can generate an AR environment to be experienced by the user, and that can perform gaze tracking (including eye gaze tracking and/or head gaze tracking) for detection of user inputs.

The electronic device 300 may include a sensing system 360 and a control system 370. The sensing system 360 may include one or more different types of sensors, including, for example, a light sensor, an audio sensor, an image sensor, a distance/proximity sensor, and/or other sensors and/or different combination(s) of sensors. In some implementations, the sensing system 360 may include one or more gaze tracking sensors, including, for example, an eye tracking system. In some implementations, the eye tracking system may include one or more image sensors, or cameras, positioned to detect and track eye gaze of the user. In some implementations, the eye tracking system may include one or more light sources such as, for example, light emitting diodes (LEDs) that emit light, for example, infrared light, directed toward the eyes of the user. Reflection of this light emitted by the LEDs from the eyes of the user may be detected by, for example, one or more light sensors of the sensing system 360. Eye gaze may be tracked based on the captured reflection of the light emitted by the LEDs. In some implementations, the sensing system 360 may include an inertial measurement unit (IMU) to detect and track head gaze direction and movement. The control system 370 may include, for example, power/pause control device(s), audio and video control device(s), optical control device(s), and/or other such devices and/or different combination(s) of devices. The sensing system 360 and/or the control system 370 may include more, or fewer, devices, depending on a particular implementation. The electronic device 300 may include a processor 390 in communication with the sensing system 360 and the control system 370. The processor 390 may process inputs received from the sensing system 360, such as, for example, eye gaze direction and movement inputs captured by the one or more image sensors and/or head gaze direction and movement inputs captured by the IMU, to process inputs and execute instructions corresponding to the detected gaze inputs. The electronic device 300 may include an input system that can receive user inputs to be processed by the processor 290 and output by an output system 350 under the control of the control system 370. The input system 340 may include various types of input devices including, for example, a touch input surface, audio input devices that can receive audio inputs (including, for example, audio sensors, or microphones, included in the sensing system 360), a gesture recognition device (including, for example, images captured by image sensors(s) of the sensing system 360 and processed by the processor 390), and other such input devices. The output system 350 may include various types of output devices such as, for example, display device(s), audio output device(s), or speakers, physical and/or tactile output devices, and other such output devices. The electronic device 300 may include a memory 380, and a communication module 395 providing for communication between the electronic device 300 and one or more other, external device(s), such as, for example, the external devices shown in FIG. 2.

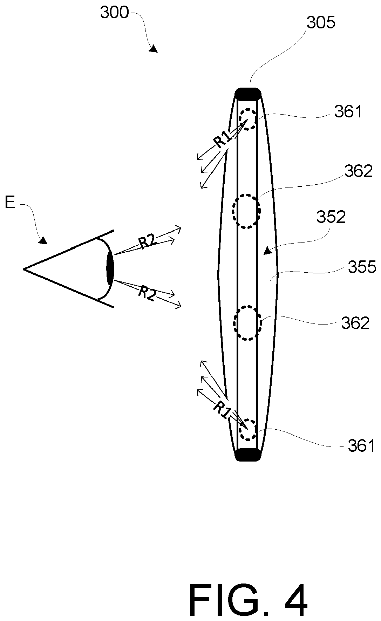

In one non-limiting example, the electronic device 300 may be a HUD, or HMD, such as, for example, glasses, as in the example shown in FIG. 4. In particular, FIG. 4 is a side, schematic view of an example HMD 300 in the form of smart glasses worn by a user. In this example, the HMD 300 includes an eye tracking device including one or more light sources 361 and one or more light sensors 362 to perform eye tracking, simply for purposes of discussion and illustration. Principles to be described herein may be applied to HMDs including other types of eye tracking devices. The example HMD 300 may include a frame 305 that positions one or more lenses 352 and a display device 355 along a line of sight, or an optical path, of the eyes E of the user wearing the HMD 300. One or more light sources 361, in the form of, for example, one or more LEDs, may emit light, for example, intermittently emit light, toward the eyes E of the user, for example, along example rays R1 shown in FIG. 4. In some implementations, the light emitted by the light source 361 may be reflected by the eyes E of the user, illustrated by example rays R2. In some implementations, the light reflected by the eyes E of the user may be detected by one or more light sensors 362. The reflection of light from the eyes E of the user may be used, for example, by the processor of the HMD 300, to track eye gaze. The processor may correlate detected eye gaze with, for example, elements visible to the user on the display device, or through the display device. In some implementations, the processor may correlate the detected eye gaze with elements of a UI displayed by the display device, to provide for user interaction with the elements of the UI. The arrangement and/or the number of components shown in the schematic view provided in FIG. 4 is for illustrative purposes only. In some implementations, the example HMD 300 may include more, or fewer light sources 361, arranged and/or positioned differently than the example arrangement shown in FIG. 4. In some implementations, the example HMD may include more, or fewer light sensors 362, arranged and/or positioned differently than the example arrangement shown in FIG. 4.

As noted above, a HUD, or HMD, such as, for example, glasses, headsets, goggles, and the like, may be configured to receive gaze inputs including, for example, eye gaze inputs and/or head gaze inputs, in an AR and/or a VR environment. In some implementations, eye gaze as an input modality may rely on eye tracking performed by the HMD. In some situations, slippage of the HMD, remount of the HMD, and/or other repositioning of the HMD, may have a detrimental effect on the accuracy of the eye tracking performed by the HMD, particularly when eye gaze is tracked based on reflection of light from the eyes, output by light sources and captured by light sensors of the HMD, as described above with respect to the illustrative example shown in FIG. 4, rather, than, for example, image based tracking based on images captured by cameras of the HMD, which may consume a prohibitive amount of power in a power constrained device such as an HMD. This detrimental effect on the accuracy of eye tracking may, in turn, affect the accuracy of eye gaze as an input modality. Recalibration to restore the accuracy of the eye tracking may be time consuming and resource intensive.

In a system and method, in accordance with implementations described herein, a slippage resistant UI may make use of a pattern of movement for elements of the UI that are selectable by a user of the HMD. In some implementations, this may allow the system to differentiate selection of an element of the UI based on gaze trajectory, even in the event of slippage, remount, or other movement of the HMD which may cause the gaze trajectory to no longer be in alignment with the UI elements. In some implementations, this may also allow the system to adjust calibration of the display of UI elements to realign a gaze trajectory estimate in accordance with a determined slippage. In some implementations, a gaze input may be matched with a corresponding UI element (for example, an intended user selection) based on a gaze trajectory, rather than an absolute position of a gaze point, which is otherwise susceptible to slippage errors, and which would otherwise require recalibration. A system and method, in accordance with implementations described herein, may account for slippage in determining a user intent with respect to UI elements, without relying on considerable changes in eye tracking methodologies.

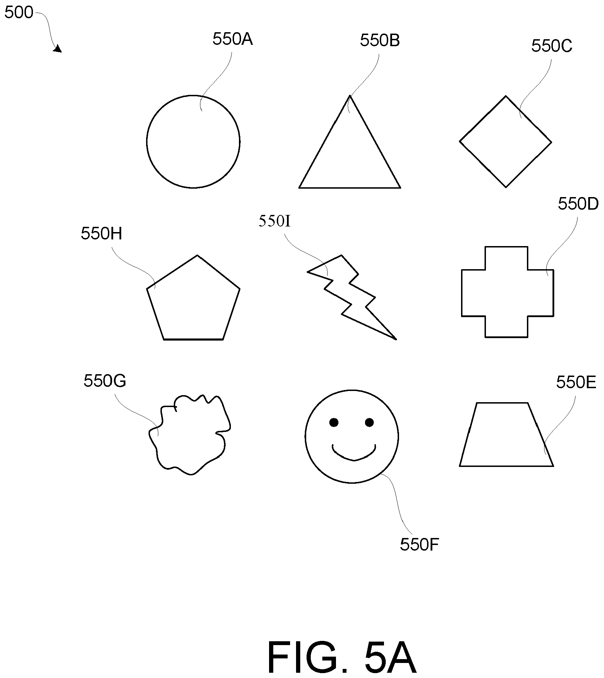

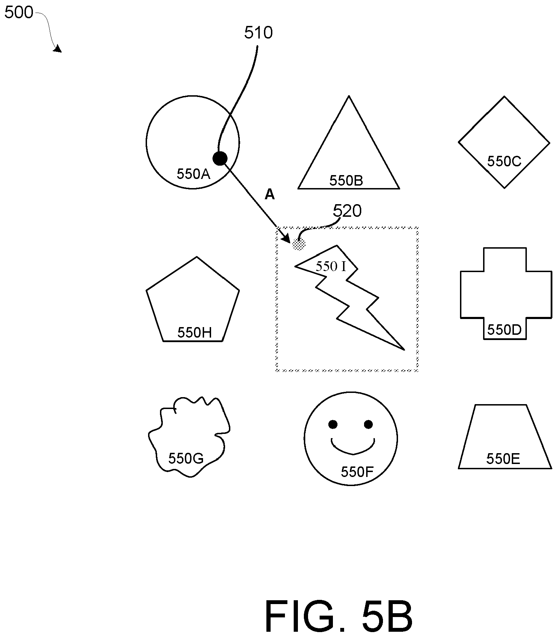

FIG. 5A illustrates an example UI 500 which may be displayed to a user of the example electronic device 300 described above, in an AR/VR environment as described above. The example UI 500 may include one or more static UI elements 550A through 550I. The static UI elements 550A-550I may be selectable by the user, using a gaze input as described above. FIG. 5B illustrates a user interaction with the example UI 300, in a situation in which some sort of movement of the HMD 300 has occurred since calibration (i.e., slippage, remount, and the like). As shown in FIG. 5B, in the situation in which the example slippage has occurred, a user eye gaze may be intended for the point 510 (corresponding to selection of the UI element 550A). However, due to the example slippage, the gaze may instead be estimated to have been directed at the point 520 on the static UI 500, resulting in matching with, and selection of, the UI element 550I, rather than the UI element 550A as intended. Matching of gaze to the static UI 500/static UI elements 550A-550I is sensitive to gaze offsets (represented by the arrow A), and thus the gaze offset due to slippage results in an inaccuracy in the user's interaction with the static UI 500, and, in this example, an inaccuracy in the resulting selection. That is, in this example, matching of the user gaze with one of the static UI elements 550A-550H of the static UI 500 is based on the absolute position of the gaze point with respect to the static UI 500/static UI elements 550A-550H, which has been offset due to the slippage. In this situation, correction requires a full recalibration process.

In contrast, dynamic matching of user gaze with a dynamic UI including dynamic, or moving, UI elements, in accordance with implementations described herein, may be less susceptible to inaccuracy based on to gaze offsets due to slippage. In a dynamic UI including dynamic UI elements, in accordance with implementations described herein, matching (for example, between a gaze and an intended UI element) may be performed based on a gaze trajectory (and not on the absolute position of the gaze point), as the user's eye follows a given UI element for a target duration, or, as the user's eye performs a smooth pursuit of the given UI element intended for selection. Once one of the dynamic UI elements has been successfully selected, an eye-to-screen calibration can be calculated, based on the (known) trajectories of the dynamic UI elements and an estimated gaze trajectory observed during the smooth pursuit of the selected dynamic UI element. This calibration procedure may be relatively seamless, and may account for gaze offset due to slippage going forward.

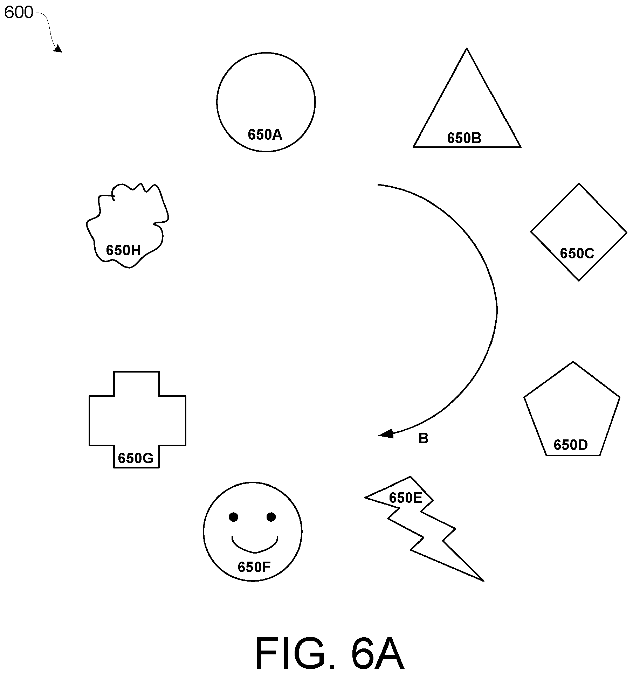

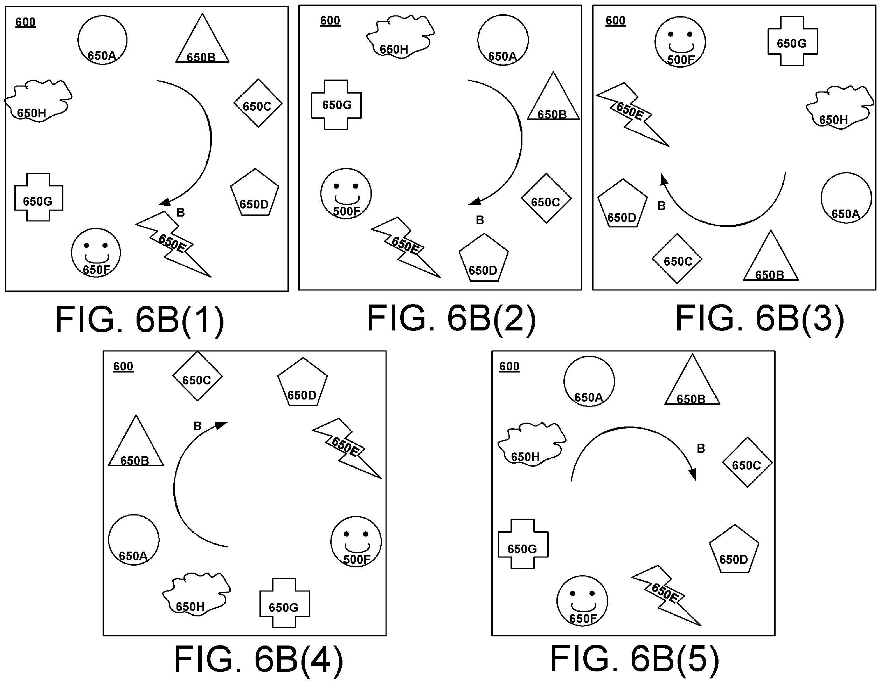

FIG. 6A illustrates an example UI 600, in accordance with implementations described herein. The example UI 600 is a dynamic UI 600, including a plurality of dynamic UI elements 650A through 650H. That is, in this example UI 600, the UI elements 650A-650H are movable, or displayed in a state in which the UI elements 650A-650H are in motion, and move in linearly decoupled trajectories. In the example implementation to be described with respect to FIGs. 6A-6C, the example dynamic UI elements 650A-650H have a substantially circular arrangement, and move in a substantially circular pattern, as shown, for example, by the arrow B, simply for ease of discussion and illustration. Movement in this substantially circular pattern is illustrated sequentially in FIGs. 6B(1) through 6B(5). However, the principles to be described herein may be applied to other dynamic UIs, including a UI having a different number of UI elements and/or which the UI elements are arranged differently, and/or in which UI elements move in other patterns and/or that follow other movement trajectories within the dynamic UI, including uniform and non-uniform, or random, or pseudo-random, patterns.

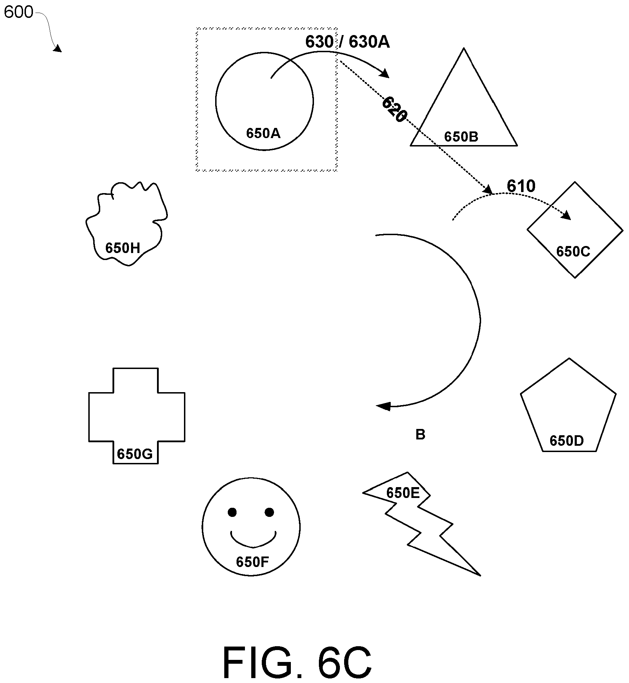

FIG. 6C illustrates a user interaction with the example dynamic UI 600, in a situation in which some sort of movement of the HMD 300 has occurred since calibration (i.e., slippage of the HMD 300, remount of the HMD 300, repositioning of the HMD 300, and the like). As shown in FIG. 6C, in the situation in which the example slippage has occurred, a user eye gaze may be intended for the UI element 650A. In this example, although there has been slippage of the HMD 300 (which would typically cause the gaze point to be offset from the intended target UI element, as described above), the gaze trajectory 610 (rather than the gaze point) may be tracked. The system may detect that the gaze trajectory 610 is in pursuit of, or follows the display trajectory 630A of the UI element 650A. In this situation, the display trajectory 630A of the UI element 650A is known by the system. Even though the user gaze trajectory 610 may be at an offset 620 relative to the intended target UI element 650A and the associated display trajectory 630A of the target UI element 650A, the system may match the detected gaze trajectory 610 with the display trajectory 630A of the UI element 650A. Based on the matching of the gaze trajectory 610 with the display trajectory 630A of the UI element 650A, the system may determine that the UI element 650A is the target of the detected gaze 610, and the UI element 650A may be selected. In some implementations, after confirmation of the selection of the target UI element 650A, the system may use the determined offset 620 to perform a relatively straightforward eye to display calibration, for use by the system going forward, for example, until the need for another such recalibration is detected, an end of session is detected, and the like.

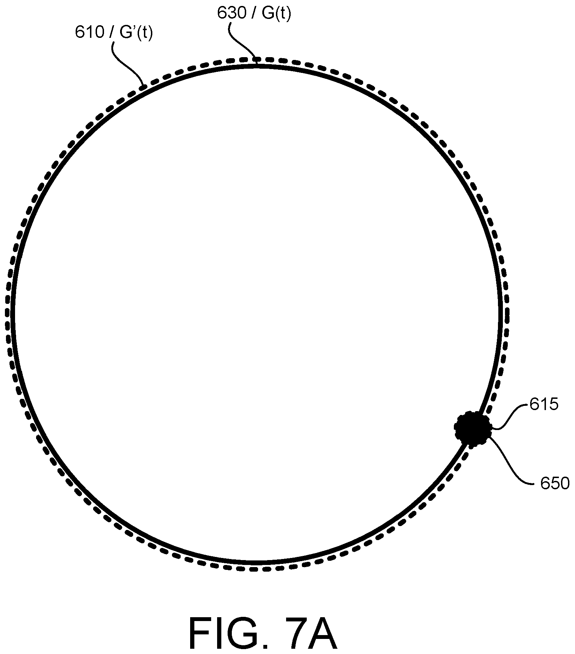

FIGs. 7A through 7C are schematic diagrams of the matching of a gaze trajectory, such as, for example, the gaze trajectory 610 described above with respect to FIGs. 6A-6C, with a movement pattern, or a display trajectory, of a target UI element, such as, for example, the known display trajectory 630 of the target UI element 650A described above with respect to FIGs. 6A-6C, in accordance with implementations described herein.

As noted above, each of the example dynamic UI elements 650 may have its own, distinct display trajectory 630. This may allow the system to differentiate between the plurality of different UI elements 650, particularly when attempting to match the detected gaze trajectory 610 with one of the plurality of UI elements 650, to in turn determine an intended target UI element 650 associated with the gaze trajectory 610.

The schematic diagrams shown in FIGs. 7A through 7G illustrate the example display trajectory 630 of one of the example UI elements 650, together with the example gaze trajectory 610 in a variety of different slippage scenarios. In the example arrangement shown in FIGs. 7A-7G, the example display trajectory 630, i.e., the example trajectory, or path, followed by the example dynamic UI element 650, is substantially circular, simply for purposes of discussion and illustration. In some implementations, the display trajectory may follow other patterns, including pseudo random patterns. Regardless of the pattern, or shape, or contour, of the display trajectory, the pattern, or shape, or contour, of the display trajectory associated with a particular UI element is known to the system, allowing the system to differentiate between the various UI elements, and to match the detected, or observed, gaze trajectory with one of the UI elements

FIG. 7A illustrates a scenario in which the HMD 300 is positioned on the user's face, and an eye to screen calibration has been done. In the calibrated state shown in FIG. 7A, the display trajectory 630 (shown in solid lines) and the display trajectory 610 (shown in dashed lines) are substantially aligned. That is, the observed gaze trajectory 630 substantially matches, or coincides with, the display trajectory 610 of a UI element 650 being gazed upon by the user. That is, the dynamic UI element 650, which moves along the display trajectory 610, is substantially aligned with the user gaze 615 at the particular point in time represented in FIG. 7A.

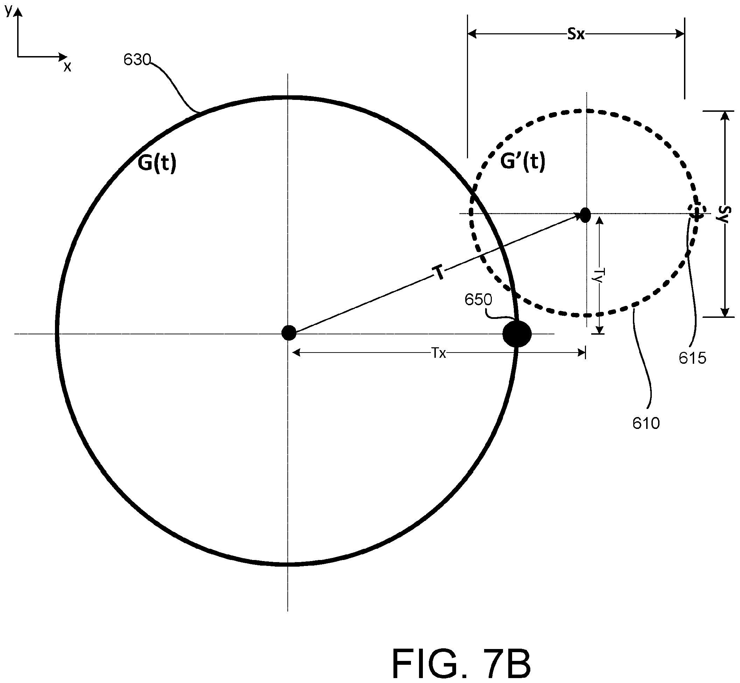

FIGs. 7B through 7G illustrate various scenarios in which some form of slippage of the HMD 300, from the state shown in FIG. 7A, has caused the observed, or detected, gaze trajectory 610 to be offset from the display trajectory 630 of the target UI element 650. While illustrated statically in FIGs. 7A through 7G, it is understood that the dynamic UI element 650 moves along the pattern defined by the display trajectory 630 (illustrated in solid lines), representing a function G(t). The gaze trajectory 610 (illustrated in dashed lines) may represent a function G'(t). The function G'(t) may provide a measure, or an estimate, of the pattern of the observed, or detected gaze trajectory 610, to be matched to one of the UI elements 650 of the dynamic UI 600. In FIGs. 7A-7G, the detected user gaze 615 is shown at a point in time, corresponding to the point in time represented by the position of the dynamic UI element 650 along the display trajectory 630. In the examples shown in FIGs. 7B through 7G, due to slippage of the HMD 300, the user gaze targeted at the UI element 650 does not follow the display trajectory 630 of the target UI element 650. Rather, the gaze trajectory 610 is offset from the display trajectory 630 of the target UI element 650 due to slippage of the HMD 300. In particular, there is a translational offset T, and a scaling offset S, between the display trajectory 630 and the gaze trajectory 610 due to the slippage of the HMD 300. FIGs. 7B through 7G illustrate various example scenarios corresponding to different types of slippage of the HMD 300 corresponding arrangements of the HMD 300 relative to the face/eyes of the user due to the slippage.

FIG. 7B illustrates an example in which there has been some translation of the HMD 300, with substantially homogeneous scaling between the display trajectory 630 and the observed gaze trajectory 610. As shown in FIG. 7B, the observed, or detected user gaze trajectory 610 (shown in dashed lines) is now somewhat translated, or offset relative to the display trajectory 630 (shown in solid lines) of the target UI element 650 due to the slippage of the HMD 300. In the example shown in FIG. 7B, the gaze trajectory 610 is offset, or translated in the X direction (i.e., along an X axis) and the Y direction (i.e., along a Y axis), relative to the display trajectory 650. The translational offset, or translation, of the gaze trajectory 610 is represented by the vector T, extending from a central portion of the pattern representing the display trajectory 630 to a central portion of the pattern representing the gaze trajectory 610. The translational offset T may be defined by components Tx (offset, or translation, or shift in the X direction, or along the X axis) and Ty (offset, or translation, or shift in the Y direction, or along the Y axis). The translational offset may be in response to, for example, movement or displacement of the HMD 300 in the X direction and/or the Y direction (for example, relative to the calibrated position shown in FIG. 7A). In the example shown in FIG. 7B, the scaling offset S of the gaze trajectory 610 may be represented by scaling components Sx (scaling in the X direction, or along the X axis) and Sy (scaling in the Y direction, or along the Y axis). The scaling component Sx may represent a compression, or an expansion, along the X-axis, between the display trajectory 630 and the gaze trajectory 610. The scaling component Sy may represent a compression, or an expansion, along the Y-axis, between the display trajectory 630 and the gaze trajectory 610. The scaling offset may be in response to, for example, a movement of the HMD 300 closer to, or further away from, the face/eyes of the user, causing sensor(s) of the HMD 300 to be closer to and/or further away from the face/eyes of the user. In the example shown in FIG. 7B, the gaze trajectory 610 is scaled (scaled down, or reduced) relative to the display trajectory 630 due to the slippage of the HMD 300 in a substantially homogenous, or uniform, manner, in that the scaling Sx in the X direction is substantially the same as the scaling Sy in the Y direction. In this implementation, realistic slippage of the HMD 300 only results in scaling (a substantially uniform scaling in the X and Y directions), but did not cause a deformation of the gaze trajectory 610.

Thus, the translation components Tx and Ty, together with the scaling components Sx and Sy, may define translation and/or scaling and/or deformation of the user gaze trajectory 610 due to slippage of the HMD 300. Translation may, at least in part, occur due to, for example, movement of the HMD 300 along the bridge of the nose, lateral (i.e., left to right) movement of the HMD 300 relative to the user's face, and the like. Scaling, in the form of compression and/or expansion, may, at least in part, occur due to repositioning of sensors due to slippage, positioning some sensors of the HMD 300 closer to and/or further away from the user's face. Once a match is made with the target UI element 650 of the dynamic UI 600, the translational offsets Tx, Ty and/or the scaling offsets Sx, Sy, between the gaze trajectory 610 and the known display trajectory 630, may be determined, and those offsets may be applied to gaze detection going forward, to provide for eye to screen recalibration. That is, once the gaze trajectory 610 is analyzed and matched with a display trajectory 630 of one of the UI elements 650, for selection of the target UI element 650, an eye to screen recalibration may be performed, using those offsets, to return the system to a calibrated state as shown in FIG. 7A, even in the slipped state of the HMD 300.

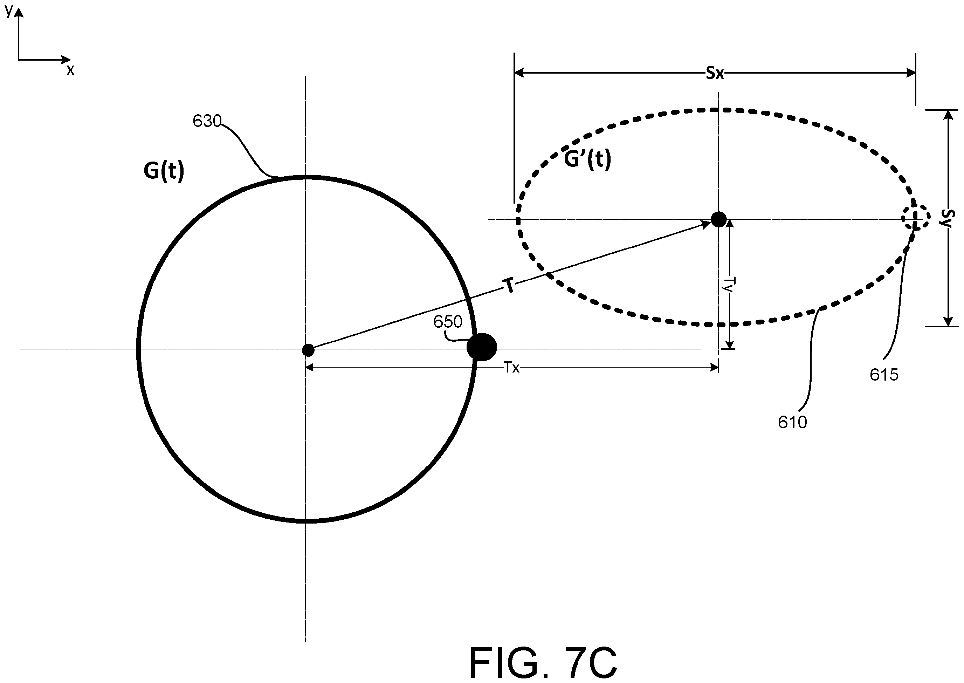

FIG. 7C illustrates a situation in which slippage of the HMD 300 has caused a translational offset T (defined by the translation components Tx and Ty), and a scaling offset S (defined by the scaling components Sx and Sy). In the example shown in FIG. 7C, the observed, or detected gaze trajectory 610 is now somewhat deformed due to the slippage of the HMD 300. That is, in this example, the scaling offset S includes a scaling Sx (in the X direction, or along the X axis) that is independent from the scaling Sy (in the Y direction, or along the Y axis) compared to the substantially homogeneous, or uniform scaling in the example shown in FIG. 7B. In this example, the scaling component Sx may represent an expansion in the X direction (or along the X axis), and the scaling component Sy may represent a compression in the Y direction (or along the Y axis). This may indicate that the slippage of the HMD 300 has caused some sensor(s) of the HMD 300 to be positioned closer to the face/eyes of the user, and some sensor(s) to be positioned further from the face/eyes of the user (compared to the calibrated position shown in FIG. 7A).

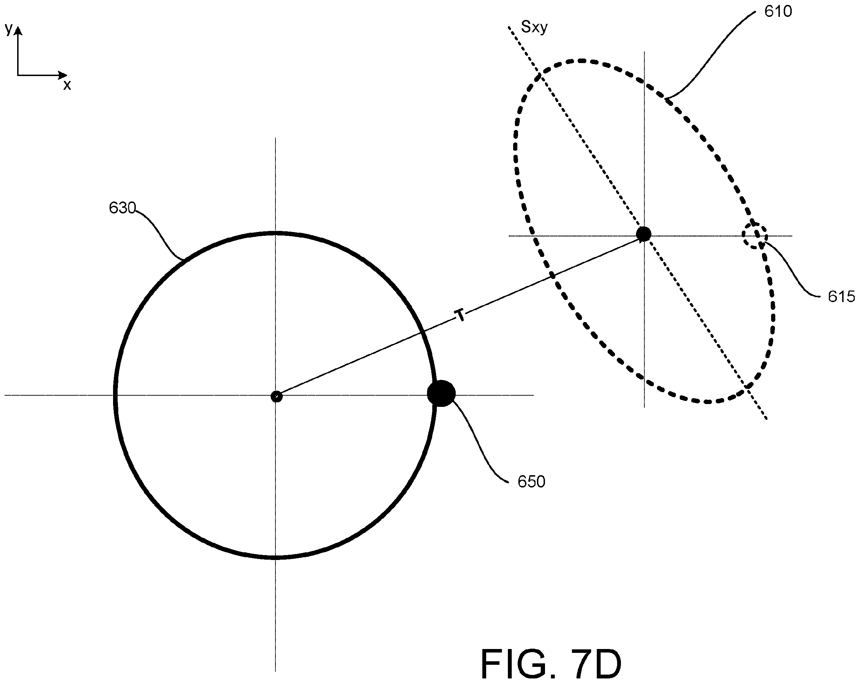

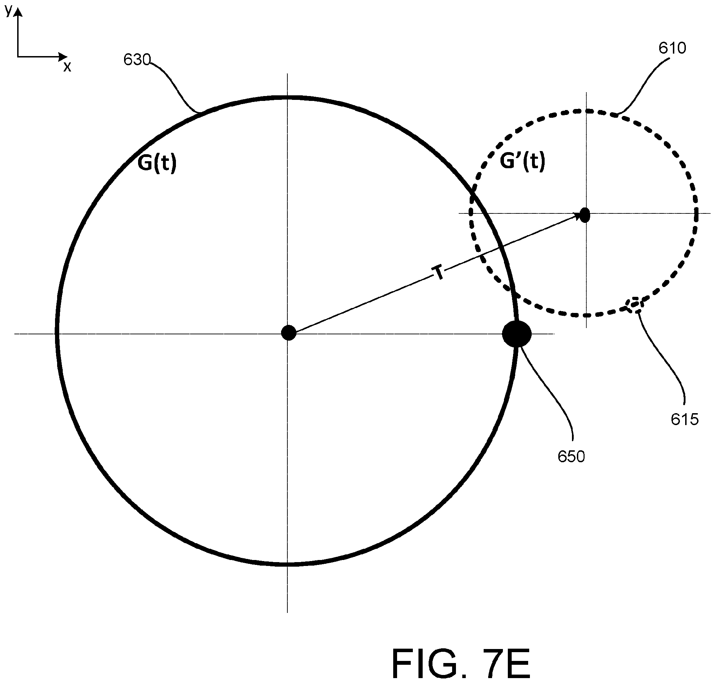

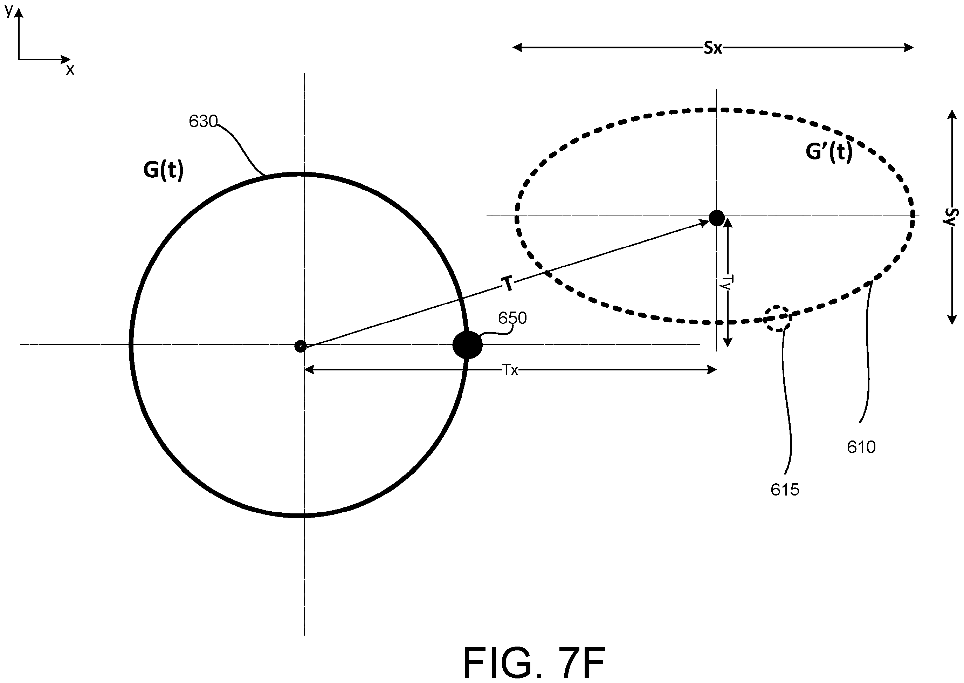

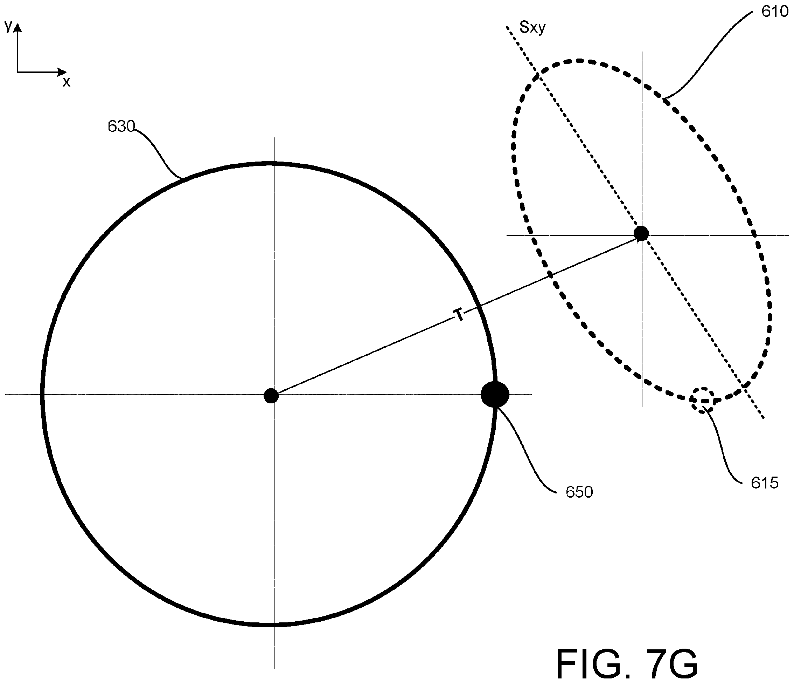

FIG. 7D illustrates an implementation in which realistic slippage of the HMD 300 has caused a translational offset T and a scaling offset S including some level of shear Sxy, indicating non-uniform slippage of the HMD 300. FIG. 7E illustrates a situation in which slippage of the HMD 300 has caused a translational offset T, with homogenous, or uniform, scaling S in the X direction and the Y direction. In the example shown in FIG. 7E, the slippage also includes some degree of rotation of the HMD 300, as noted by the offset position of the gaze 615 of the gaze trajectory 610 relative to the target UI element 650 on the display trajectory 630 at the illustrated point in time. FIG. 7F illustrates an implementation in which realistic slippage of the HMD 300 has caused a translational offset T, with independent scaling S in the X direction (i.e., expansion) and the Y direction (i.e., compression). In the example shown in FIG. 7F, the slippage also includes some degree of rotation of the HMD 300, as noted by the offset position of the gaze 615 of the gaze trajectory 610 relative to the target UI element 650 on the display trajectory 630 at the illustrated point in time.. FIG. 7G illustrates a situation in which slippage of the HMD 300 has caused a translational offset T, and a scaling offset S, including shear Sxy. In the example shown in FIG. 7G, the slippage also includes some degree of rotation of the HMD 300, as noted by the offset position of the gaze 615 of the gaze trajectory 610 relative to the target UI element 650 on the display trajectory 630 at the illustrated point in time

In some implementations, one or more algorithms may be implemented in determining a target UI element 650 based on a detected gaze trajectory 610 in the event of slippage of the HMD 300. For example, in some implementations, modeling of the gaze tracking (in an example of translational slippage) may be characterized by Equation 1 below.

$$\text{Equation 1} \qquad G'(t) = SG(t) + T$$

In Equation 1, G(t) may define the true display trajectory associated with a particular UI element. T may represent the translation component, and S may represent the scaling component, associated with the slippage of the HMD, as discussed above. G'(t), the (estimated) user gaze trajectory may be determined using Equation 1.

In some implementations, this may be accomplished by matching a derivative of the estimated gaze trajectory 610 with a derivative of the movement pattern defined by the display trajectory 630 of the target UI element 650, characterized by Equation 2 below. In some situations, this derivative approach may be most readily applicable to a situation in which the translational offset is the main component of slippage, but may experience sensitivity to noise.

$$\text{Equation 2} \qquad G'(t)/dx = dSG(t)/dx \cong SdY(t)/dx$$

In some implementations, the gaze trajectory G'(t) can be matched to UI element trajectories using a phase detection algorithm to match the gaze trajectory with the movement pattern of the target UI element. Such a phase detection algorithm may be less sensitive to noise, translational offset and scaling. However, phase detection algorithms, such as, for example, the Fourier shift theorem, may rely on a sampling period that is in the order of magnitude, or longer, than the signal period. This may pose a challenge in balancing providing for relatively rapid user interaction with the dynamic UI, with movement speed of the UI elements of the dynamic UI.

As noted above, FIGs. 7E, 7F and 7G illustrate examples in which the slippage of the HMD 300 includes the translational and scaling components as described above, and also a rotational component, causing the detected gaze trajectory 610 to be offset from the display trajectory 630 of the target UI element 650. Rotational slippage may occur, at least in part, due to, for example, upward movement of a first lateral side of the HMD 300 and downward movement of a second lateral side of the HMD 300, and the like In some implementations, modeling of the gaze tracking (in an example including rotational slippage) may be characterized by Equation 3 below.

$$\text{Equation 3} \qquad G'(t) = SRG(t) + T$$

In Equation 3, S may represent the scaling component of slippage, R may represent the rotational component of slippage, G(t) may define the true display trajectory associated with a particular UI element, and T may represent the translation component of slippage. In this manner, G'(t), the (estimated) user gaze trajectory, in a situation including rotational slippage of the HMD 300, may be determined using Equation 3.

In some implementations, slippage may include independent scaling offsets Sx, Sy (i.e., non-homogeneous, or non-uniform Sx, Sy resulting in expansion and/or compression in the X and/or Y directions), as described above. Independent offset and scaling factors on each of the X and Y axes may be represented by Equations 4 and 5 below.

$$\text{Equation 4} \qquad x' = a_1 x + a_0$$

$$\text{Equation 5} \qquad y' = b_1 x + b_0$$

An example dynamic UI, such as, for example, the dynamic UI 600 described above, may include some number N of dynamic UI elements, such as, for example, the dynamic UI elements 650 described above. When modeling slippage with respect to a dynamic UI having N UI elements, there are N+1 hypotheses as to which of the UI elements is the target UI element (i.e., the UI element intended for selection by the detected user gaze). That is, the user gaze may be directed to one of the N UI elements, plus a hypothesis allowing for the situation in which the user gaze is not intended for any of the N UI elements. For each of the N hypotheses, the detected gaze including these offsets and independent scalings Sx and Sy may be modeled and fit to one of the UI elements by solving the linear Equations 6 and 7. When translation offsets are combined with shear, the detected gaze including these offsets may be modeled and fit to one of the UI elements by sovling Equation 8 for each of the hypotheses and selecting the best fit. This method has been shown to be resistant to shear and small amounts of rotational slippage.

$$[x'_0 \ \ldots \ x'_M] = [a_1 \ a_0] \begin{bmatrix} x_0 & \ldots & x_M \\ 1 & \ldots & 1 \end{bmatrix}$$

Equation 6

$$[y'_0 \ \ldots \ y'_M] = [b_1 \ b_0] \begin{bmatrix} y_0 & \ldots & y_M \\ 1 & \ldots & 1 \end{bmatrix}$$

Equation 7

$$\begin{bmatrix} x'_0, \ldots, x'_M \\ y'_0, \ldots, y'_M \end{bmatrix} = \begin{bmatrix} a_0 & s_{xy} & a_1 \\ 0 & b_0 & b_1 \end{bmatrix} \begin{bmatrix} x_0, \ldots, x_M \\ y_0, \ldots, y_M \\ 1, \ldots, 1 \end{bmatrix}$$

Equation 8

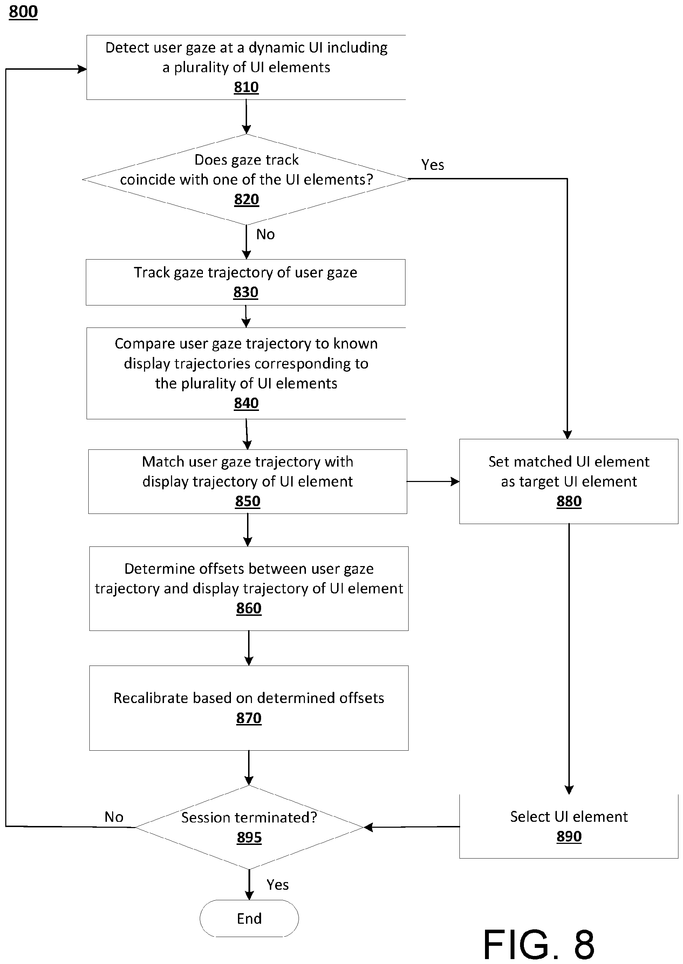

FIG. 8 is a flowchart of an example method 800 of detecting a user gaze input in an AR/VR environment, in accordance with implementations described herein.

A dynamic UI, such as the example dynamic UI 600 described above, may be displayed to a user in an AR/VR environment via, for example, a display device of an HMD 300 such as, for example, glasses, goggles and the like. The dynamic UI 600 include, according to the claimed invention, a plurality of dynamic UI elements, such as the example dynamic UI elements 650 described above, each of the dynamic UI elements 650 moving along a respective independent display trajectory 630 that is known by the system. One or more of the dynamic UI elements 650 are selectable by the user using a number of different input modes, including, for example, a gaze input mode.

The system detects a user gaze directed to the dynamic UI 600 including the plurality of dynamic UI elements 650 (block 810). If it is determined that the gaze input coincides with one of the dynamic UI elements 650, then the system sets, according to the claimed invention, the identified dynamic UI element 650 as the target UI element, and select the UI element 650 for further action (blocks 820, 880, 890). If it is determined that the gaze input does not coincide with one of the dynamic UI elements 650 (block 820), then the system tracks the gaze trajectory 610 associated with the detected user gaze (830). The system may compare the tracked user gaze trajectory 610 with the known display trajectories 630 corresponding to the dynamic UI elements 650 (block 840) to match the user gaze trajectory 610 with a display trajectory 630 of one of the dynamic UI elements 650 (block 850). In response to matching of the user gaze trajectory 610 with the display trajectory 630 of one of the dynamic UI elements 650, the system may set the identified UI element 650 as the target UI element, and select the target UI element for further action (blocks 850, 880, 890). The system then determines offsets between the user gaze trajectory 610 and the display trajectory 630 of the target UI element 650 (block 860). The offsets include at least one of a translational offset, a scaling offset, or a rotational offset. The system uses the determined offsets to perform a recalibration (block 870). The process may continue until the session is terminated (block 895).

FIG. 9 shows an example of a computer device 1000 and a mobile computer device 1050, which may be used with the techniques described here. Computing device 1000 includes a processor 1002, memory 1004, a storage device 1006, a high-speed interface 1008 connecting to memory 1004 and high-speed expansion ports 1010, and a low speed interface 1012 connecting to low speed bus 1014 and storage device 1006. Each of the components 1002, 1004, 1006, 1008, 1010, and 1012, are interconnected using various busses, and may be mounted on a common motherboard or in other manners as appropriate. The processor 1002 can process instructions for execution within the computing device 1000, including instructions stored in the memory 1004 or on the storage device 1006 to display graphical information for a GUI on an external input/output device, such as display 1016 coupled to high speed interface 1008. In other implementations, multiple processors and/or multiple buses may be used, as appropriate, along with multiple memories and types of memory. Also, multiple computing devices 1000 may be connected, with each device providing portions of the necessary operations (e.g., as a server bank, a group of blade servers, or a multi-processor system).

The memory 1004 stores information within the computing device 1000. In one implementation, the memory 1004 is a volatile memory unit or units. In another implementation, the memory 1004 is a non-volatile memory unit or units. The memory 1004 may also be another form of computer-readable medium, such as a magnetic or optical disk.

The storage device 1006 is capable of providing mass storage for the computing device 1000. In one implementation, the storage device 1006 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 1004, the storage device 1006, or memory on processor 1002.

The high speed controller 1008 manages bandwidth-intensive operations for the computing device 1000, while the low speed controller 1012 manages lower bandwidth-intensive operations. Such allocation of functions is exemplary only. In one implementation, the high-speed controller 1008 is coupled to memory 1004, display 1016 (e.g., through a graphics processor or accelerator), and to high-speed expansion ports 1010, which may accept various expansion cards (not shown). In the implementation, low-speed controller 1012 is coupled to storage device 1006 and low-speed expansion port 1014. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 1000 may be implemented in a number of different forms, as shown in the figure. For example, it may be implemented as a standard server 1020, or multiple times in a group of such servers. It may also be implemented as part of a rack server system 1024. In addition, it may be implemented in a personal computer such as a laptop computer 1022. Alternatively, components from computing device 1000 may be combined with other components in a mobile device (not shown), such as device 1050. Each of such devices may contain one or more of computing device 1000, 1050, and an entire system may be made up of multiple computing devices 1000, 1050 communicating with each other.

Computing device 1050 includes a processor 1052, memory 1064, an input/output device such as a display 1054, a communication interface 1066, and a transceiver 1068, among other components. The device 1050 may also be provided with a storage device, such as a microdrive or other device, to provide additional storage. Each of the components 1050, 1052, 1064, 1054, 1066, and 1068, are interconnected using various buses, and several of the components may be mounted on a common motherboard or in other manners as appropriate.

The processor 1052 can execute instructions within the computing device 1050, including instructions stored in the memory 1064. The processor may be implemented as a chipset of chips that include separate and multiple analog and digital processors. The processor may provide, for example, for coordination of the other components of the device 1050, such as control of user interfaces, applications run by device 1050, and wireless communication by device 1050.

Processor 1052 may communicate with a user through control interface 1058 and display interface 1056 coupled to a display 1054. The display 1054 may be, for example, a TFT LCD (Thin-Film-Transistor Liquid Crystal Display) or an OLED (Organic Light Emitting Diode) display, or other appropriate display technology. The display interface 1056 may comprise appropriate circuitry for driving the display 1054 to present graphical and other information to a user. The control interface 1058 may receive commands from a user and convert them for submission to the processor 1052. In addition, an external interface 1062 may be provided in communication with processor 1052, so as to enable near area communication of device 1050 with other devices. External interface 1062 may provide, for example, for wired communication in some implementations, or for wireless communication in other implementations, and multiple interfaces may also be used.

The memory 1064 stores information within the computing device 1050. The memory 1064 can be implemented as one or more of a computer-readable medium or media, a volatile memory unit or units, or a non-volatile memory unit or units. Expansion memory 1074 may also be provided and connected to device 1050 through expansion interface 1072, which may include, for example, a SIMM (Single In Line Memory Module) card interface. Such expansion memory 1074 may provide extra storage space for device 1050, or may also store applications or other information for device 1050. Specifically, expansion memory 1074 may include instructions to carry out or supplement the processes described above, and may include secure information also. Thus, for example, expansion memory 1074 may be provide as a security module for device 1050, and may be programmed with instructions that permit secure use of device 1050. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 1064, expansion memory 1074, or memory on processor 1052, that may be received, for example, over transceiver 1068 or external interface 1062.

Device 1050 may communicate wirelessly through communication interface 1066, which may include digital signal processing circuitry where necessary. Communication interface 1066 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 1068. In addition, short-range communication may occur, such as using a Bluetooth, Wi-Fi, or other such transceiver (not shown). In addition, GPS (Global Positioning System) receiver module 1070 may provide additional navigation- and location-related wireless data to device 1050, which may be used as appropriate by applications running on device 1050.

Device 1050 may also communicate audibly using audio codec 1060, which may receive spoken information from a user and convert it to usable digital information. Audio codec 1060 may likewise generate audible sound for a user, such as through a speaker, e.g., in a handset of device 1050. Such sound may include sound from voice telephone calls, may include recorded sound (e.g., voice messages, music files, etc.) and may also include sound generated by applications operating on device 1050.

The computing device 1050 may be implemented in a number of different forms, as shown in the figure. For example, it may be implemented as a cellular telephone 1080. It may also be implemented as part of a smart phone 1082, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

In some implementations, the computing devices depicted in FIG. 10 can include sensors that interface with a virtual reality (VR headset/HMD device 1090). For example, one or more sensors included on a computing device 1050 or other computing device depicted in FIG. 10, can provide input to VR headset 1090 or in general, provide input to a VR space. The sensors can include, but are not limited to, a touchscreen, accelerometers, gyroscopes, pressure sensors, biometric sensors, temperature sensors, humidity sensors, and ambient light sensors. The computing device 1050 can use the sensors to determine an absolute position and/or a detected rotation of the computing device in the VR space that can then be used as input to the VR space. For example, the computing device 1050 may be incorporated into the VR space as a virtual object, such as a controller, a laser pointer, a keyboard, a weapon, etc. Positioning of the computing device/virtual object by the user when incorporated into the VR space can allow the user to position the computing device so as to view the virtual object in certain manners in the VR space. For example, if the virtual object represents a laser pointer, the user can manipulate the computing device as if it were an actual laser pointer. The user can move the computing device left and right, up and down, in a circle, etc., and use the device in a similar fashion to using a laser pointer.

In some implementations, one or more input devices included on, or connect to, the computing device 1050 can be used as input to the VR space. The input devices can include, but are not limited to, a touchscreen, a keyboard, one or more buttons, a trackpad, a touchpad, a pointing device, a mouse, a trackball, a joystick, a camera, a microphone, earphones or buds with input functionality, a gaming controller, or other connectable input device. A user interacting with an input device included on the computing device 1050 when the computing device is incorporated into the VR space can cause a particular action to occur in the VR space.

In some implementations, a touchscreen of the computing device 1050 can be rendered as a touchpad in VR space. A user can interact with the touchscreen of the computing device 1050. The interactions are rendered, in VR headset 1090 for example, as movements on the rendered touchpad in the VR space. The rendered movements can control virtual objects in the VR space.

In some implementations, one or more output devices included on the computing device 1050 can provide output and/or feedback to a user of the VR headset 1090 in the VR space. The output and feedback can be visual, tactical, or audio. The output and/or feedback can include, but is not limited to, vibrations, turning on and off or blinking and/or flashing of one or more lights or strobes, sounding an alarm, playing a chime, playing a song, and playing of an audio file. The output devices can include, but are not limited to, vibration motors, vibration coils, piezoelectric devices, electrostatic devices, light emitting diodes (LEDs), strobes, and speakers.

In some implementations, the computing device 1050 may appear as another object in a computer-generated, 3D environment. Interactions by the user with the computing device 1050 (e.g., rotating, shaking, touching a touchscreen, swiping a finger across a touch screen) can be interpreted as interactions with the object in the VR space. In the example of the laser pointer in a VR space, the computing device 1050 appears as a virtual laser pointer in the computer-generated, 3D environment. As the user manipulates the computing device 1050, the user in the VR space sees movement of the laser pointer. The user receives feedback from interactions with the computing device 1050 in the VR environment on the computing device 1050 or on the VR headset 1090.

In some implementations, a computing device 1050 may include a touchscreen. For example, a user can interact with the touchscreen in a particular manner that can mimic what happens on the touchscreen with what happens in the VR space. For example, a user may use a pinching-type motion to zoom content displayed on the touchscreen. This pinching-type motion on the touchscreen can cause information provided in the VR space to be zoomed. In another example, the computing device may be rendered as a virtual book in a computer-generated, 3D environment. In the VR space, the pages of the book can be displayed in the VR space and the swiping of a finger of the user across the touchscreen can be interpreted as turning/flipping a page of the virtual book. As each page is turned/flipped, in addition to seeing the page contents change, the user may be provided with audio feedback, such as the sound of the turning of a page in a book.

In some implementations, one or more input devices in addition to the computing device (e.g., a mouse, a keyboard) can be rendered in a computer-generated, 3D environment. The rendered input devices (e.g., the rendered mouse, the rendered keyboard) can be used as rendered in the VR space to control objects in the VR space.

Computing device 1000 is intended to represent various forms of digital computers and devices, including, but not limited to laptops, desktops, workstations, personal digital assistants, servers, blade servers, mainframes, and other appropriate computers. Computing device 1050 is intended to represent various forms of mobile devices, such as personal digital assistants, cellular telephones, smart phones, and other similar computing devices. The components shown here, their connections and relationships, and their functions, are meant to be exemplary only, and are not meant to limit implementations of the inventions described and/or claimed in this document.

A number of embodiments have been described. Nevertheless, it will be understood that various modifications may be made without departing from the scope of the specification.

**Claims**

1. A computer-implemented method, comprising:

    detecting (810) a user gaze directed at a virtual UI displayed on a display device of a head mounted display, HMD, device (300), the virtual UI including a plurality of virtual UI elements, wherein the virtual UI is a dynamic UI including a plurality of dynamic UI elements, each of the plurality of dynamic UI elements having a respective display trajectory defining a pattern of movement of the respective dynamic UI element;
    determining (820) that the user gaze coincides with one of the dynamic UI elements, and, in response to determining that the user gaze coincides with one of the dynamic UI elements, setting (880) the identified dynamic UI element as a target UI element and selecting (890) the identified dynamic UI element for further action, and, in response to determining that the user gaze does not coincide with one of the dynamic UI elements:

        detecting (830) a gaze trajectory corresponding to the detected user gaze;
        matching (850) the detected gaze trajectory to a display trajectory associated with a UI element of the plurality of UI elements;
        identifying the UI element as the target UI element;
        determining (860) an offset between the gaze trajectory and the display trajectory associated with the target UI element, the offset including at least one of a translational offset, a scaling offset, or a rotational offset; and

recalibrating (870) a user gaze interaction mode based on the determined offset.

2. The method of claim 1, wherein determining (860) the offset includes:

    determining the translational offset, including:

        a first translational offset in a first direction; and
        a second translational offset in a second direction; and

    determining the scaling offset, including:

        a compression or an expansion in the first direction; and
        a compression or an expansion in the second direction.

3. The method of claim 2, wherein recalibrating (870) the user gaze interaction mode includes resetting the detected user gaze with the virtual UI and the plurality of UI elements to compensate for the first and second translational offsets and the first and second scaling offsets.

4. The method of claim 1, wherein each dynamic UI element of the plurality of dynamic UI elements has a unique display trajectory defining a unique pattern of movement for the dynamic UI element.

5. The method of claim 4, wherein the display trajectory comprises a linear part, a circular part, or a curved part.

6. The method of claim 4, wherein each dynamic UI element of the plurality of dynamic UI elements has a pseudo-random display trajectory defining a pseudo-random pattern of movement for the dynamic UI element.

7. The method of at least one of the claims 1 to 6, wherein detecting the user gaze and detecting the gaze trajectory includes:

    tracking, by an eye tracking system of the HMD (300), a user eye gaze; and
    detecting the gaze trajectory based on the tracked user eye gaze relative to the virtual UI and the plurality of UI elements, wherein tracking the user eye gaze optionally includes:

        emitting, by one or more light sources (361) of the HMD (300), light towards the eyes of the user;
        detecting, by one or more light sensors (362) of the HMD (300), reflection of the light, emitted by the one or more light sources (361), by the eyes of the user; and
        tracking the user eye gaze based on the detected reflection.

8. An electronic device, comprising a head mounted display, HMD, device (300), including:

    a display (355);
    a sensing system (360);
    at least one processor (390); and
    a memory (380) storing instructions that, when executed by the at least one processor (390), cause the electronic device to:

        display, by the display (355), a virtual user interface, UI, the virtual UI including a plurality of UI elements, wherein the virtual UI is a dynamic UI including a plurality of dynamic UI elements, each of the plurality of dynamic UI elements having a respective display trajectory defining a pattern of movement of the respective dynamic UI element;
        determine that the user gaze coincides with one of the dynamic UI elements, and, in response to a determination that the user gaze coincides with one of the dynamic UI elements, setting (880) the identified dynamic UI element as target UI element and selecting (890) the identified dynamic UI element for further action, and, in response to a determination that the user gaze does not coincide with one of the dynamic UI elements:

            detect a user gaze directed at the virtual UI;
            detect a gaze trajectory corresponding to the detected user gaze;

match the detected gaze trajectory to a display trajectory associated with a UI element of the plurality of UI elements;

identify the UI element as the target UI element;

determine an offset between the gaze trajectory and the display trajectory associated with the target UI element, the offset including at least one of a translational offset, a scaling offset, or a rotational offset; and

recalibrate a user gaze interaction mode based on the determined offset.

9. The device of claim 8, wherein, in determining the offset, the instructions cause the at least one processor (390) to:

   determine the translational offset, including:

   a first translational offset in a first direction; and
   a second translational offset in a second direction; and

   determine the scaling offset, including:

   a compression or an expansion in the first direction; and
   a compression or an expansion in the second direction.

10. The device of claim 9, wherein, in recalibrating the user gaze interaction mode, the instructions cause the at least one processor (390) to reset the detected user gaze with the virtual UI and the plurality of UI elements to compensate for the first and second translational offsets and the first and second scaling offsets.

11. The device of claim 8, wherein the display trajectory comprises a linear part, a circular part, or a curved part.

12. The device of claim 8 wherein each dynamic UI element of the plurality of dynamic UI elements has a pseudo-random display trajectory defining a pseudo-random pattern of movement for the dynamic UI element.

13. The device of at least one of the claims 8 to 12, wherein, in detecting the user gaze and detecting the gaze trajectory, the instructions cause the at least one processor (390) to:
    track, by an eye tracking system of the electronic device, a user eye gaze, including:

    emit, by one or more light sources (361), light towards the eyes of the user;
    detect, by one or more light sensors (362), reflection of the light, emitted by the one or more light sources, by the eyes of the user; and
    track the user eye gaze based on the detected reflection.

14. The device of at least one of the claims 8 to 13, wherein the offset between the gaze trajectory and the display trajectory associated with the target UI element is due to movement of the HMD device (300) relative to the eyes of the user after initial calibration of the HMD device (300).

15. A non-transitory, computer-readable medium having instructions stored thereon that, when executed by a computing device according to any one of claim 8 to 14, cause the computing device to perform a method according to at least one of claims 1 to 7.

**Patentansprüche**

1. Computerimplementiertes Verfahren, umfassend:

   Erfassen (810) eines Benutzerblicks, der auf eine virtuelle UI gerichtet ist, die auf einer am Kopf angebrachten Anzeige-, HMD-, Vorrichtung (300) angezeigt wird, wobei die virtuelle UI eine Vielzahl von virtuellen UI-Elementen einschließt, wobei die virtuelle UI eine dynamische UI ist, die eine Vielzahl von dynamische UI-Elementen einschließt, und jedes der Vielzahl von dynamischen UI-Elementen eine jeweilige Anzeigetrajektorie aufweist, die ein Bewegungsmuster des jeweiligen dynamischen UI-Elements definiert;
   Bestimmen (820), dass der Benutzerblick mit einem der dynamischen UI-Elemente übereinstimmt, und als Reaktion auf das Bestimmen, dass der Benutzerblick mit einem der dynamischen UI-Elemente übereinstimmt, Festlegen (880) des identifizierten dynamischen UI-Elements als Ziel-UI-Element und Auswählen (890) des identifizierten dynamischen UI-Elements für weitere Aktionen, und als Reaktion auf das Bestimmen, dass der Benutzerblick nicht mit einem der dynamischen UI-Elemente übereinstimmt:

Erfassen (830) einer Blicktrajektorie, die dem erfassten Benutzerblick entspricht;
Anpassen (850) der erfassten Blicktrajektorie an eine Anzeigetrajektorie, die mit einem UI-Element der Vielzahl von UI-Elementen assoziiert ist;
Identifizieren des UI-Elements als das Ziel-UI-Element;
Bestimmen (860) eines Versatzes zwischen der Blicktrajektorie und der Anzeigetrajektorie, die mit dem Ziel-UI-Element assoziiert ist, wobei der Versatz mindestens einen von einem Translationsversatz, einem Skalierungsversatz oder einem Rotationsversatz einschließt; und
Neukalibrieren (870) eines Benutzerblickinteraktionsmodus basierend auf dem bestimmten Versatz.

2. Verfahren nach Anspruch 1, wobei das Bestimmen (860) des Versatzes Folgendes einschließt:

Bestimmen des Translationsversatzes, einschließend:

einen ersten Translationsversatz in eine erste Richtung; und
einen zweiten Translationsversatz in eine zweite Richtung; und

Bestimmen des Skalierungsversatzes, einschließend:

eine Stauchung oder eine Ausdehnung in der ersten Richtung; und
eine Stauchung oder eine Ausdehnung in der zweiten Richtung.

3. Verfahren nach Anspruch 2, wobei das Neukalibrieren (870) des Benutzerblickinteraktionsmodus Zurücksetzen des erfassten Benutzerblicks mit der virtuellen UI und der Vielzahl von UI-Elementen einschließt, um den ersten und zweiten Translationsversatz und den ersten und zweiten Skalierungsversatz auszugleichen.

4. Verfahren nach Anspruch 1, wobei jedes dynamische UI-Element der Vielzahl von dynamischen UI-Elementen eine einzigartige Anzeigetrajektorie aufweist, die ein einzigartiges Bewegungsmuster für das dynamische UI-Element definiert.

5. Verfahren nach Anspruch 4, wobei die Anzeigetrajektorie einen linearen Teil, einen kreisförmigen Teil oder einen gekrümmten Teil umfasst.

6. Verfahren nach Anspruch 4, wobei jedes dynamische UI-Element der Vielzahl von dynamischen UI-Elementen eine pseudozufällige Anzeigetrajektorie aufweist, die ein pseudozufälliges Bewegungsmuster für das dynamische UI-Element definiert.

7. Verfahren nach mindestens einem der Ansprüche 1 bis 6, wobei das Erfassen des Benutzerblicks und das Erfassen der Blicktrajektorie Folgendes einschließt:

Verfolgen des Blicks eines Benutzers durch ein Blickverfolgungssystem der HMD (300); und
Erfassen der Blicktrajektorie basierend auf dem verfolgten Blick des Benutzers relativ zur virtuellen UI und der Vielzahl von UI-Elementen, wobei das Verfolgen des Blicks des Benutzers wahlweise einschließt:

Aussenden von Licht in Richtung der Augen des Benutzers durch eine oder mehrere Lichtquellen (361) der HMD (300);
Erfassen der Reflexion des von der einen oder den mehreren Lichtquellen (361) ausgesendeten Lichts an den Augen des Benutzers durch einen oder mehrere Lichtsensoren (362) der HMD (300); und
Verfolgen des Benutzerblicks basierend auf der erfassten Reflexion.

8. Elektronische Vorrichtung, umfassend eine am Kopf angebrachte Anzeige-, HMD-, Vorrichtung (300), einschließend:

eine Anzeige (355);
ein Sensorsystem (360);
mindestens einen Prozessor (390); und

einen Speicher (380), in dem Anweisungen gespeichert sind, die bei Ausführung durch den mindestens einen Prozessor (390) die elektronische Vorrichtung zu Folgendem veranlassen:

Anzeigen einer virtuellen Benutzerschnittstelle, UI, durch die Anzeige (355), wobei die virtuelle UI eine Vielzahl von UI-Elementen einschließt, wobei die virtuelle UI eine dynamische UI ist, die eine Vielzahl von dynamischen UI-Elementen einschließt, wobei jedes der Vielzahl von dynamischen UI-Elementen eine jeweilige Anzeigetrajektorie aufweist, die ein Bewegungsmuster des jeweiligen dynamischen UI-Elements definiert;

Bestimmen, dass der Benutzerblick mit einem der dynamischen UI-Elemente übereinstimmt, und als Reaktion auf eine Bestimmung, dass der Benutzerblick mit einem der dynamischen UI-Elemente übereinstimmt, Festlegen (880) des identifizierten dynamischen UI-Elements als Ziel-UI-Element und Auswählen (890) des identifizierten dynamischen UI-Elements für weitere Aktionen, und als Reaktion auf eine Bestimmung, dass der Benutzerblick nicht mit einem der dynamischen UI-Elemente übereinstimmt:

Erfassen eines Benutzerblicks, der auf die virtuelle UI gerichtet ist;
Erfassen einer Blicktrajektorie, die dem erfassten Benutzerblick entspricht;
Anpassen der erfassten Blicktrajektorie an eine Anzeigetrajektorie, die mit einem UI-Element der Vielzahl von UI-Elementen assoziiert ist;
Identifizieren des UI-Elements als das Ziel-UI-Element;
Bestimmen eines Versatzes zwischen der Blicktrajektorie und der Anzeigetrajektorie, die mit dem Ziel-UI-Element assoziiert ist, wobei der Versatz mindestens einen von einem Translationsversatz, einem Skalierungsversatz oder einem Rotationsversatz einschließt; und
Neukalibrieren eines Benutzerblickinteraktionsmodus basierend auf dem bestimmten Versatz.

9. Vorrichtung nach Anspruch 8, wobei beim Bestimmen des Versatzes die Anweisungen den mindestens einen Prozessor (390) zu Folgendem veranlassen:

Bestimmen des Translationsversatzes, einschließend:

einen ersten Translationsversatz in eine erste Richtung; und
einen zweiten Translationsversatz in eine zweite Richtung; und

Bestimmen des Skalierungsversatzes, einschließend:

eine Stauchung oder eine Ausdehnung in der ersten Richtung; und
eine Stauchung oder eine Ausdehnung in der zweiten Richtung.

10. Vorrichtung nach Anspruch 9, wobei beim Neukalibrieren des Benutzerblickinteraktionsmodus die Anweisungen den mindestens einen Prozessor (390) veranlassen, den erfassten Benutzerblick mit der virtuellen UI und der Vielzahl von UI-Elementen zurückzusetzen, um den ersten und zweiten Translationsversatz und den ersten und zweiten Skalierungsversatz auszugleichen.

11. Vorrichtung nach Anspruch 8, wobei die Anzeigetrajektorie einen linearen Teil, einen kreisförmigen Teil oder einen gekrümmten Teil umfasst.

12. Vorrichtung nach Anspruch 8, wobei jedes dynamische UI-Element der Vielzahl von dynamischen UI-Elementen eine pseudozufällige Anzeigetrajektorie aufweist, die ein pseudozufälliges Bewegungsmuster für das dynamische UI-Element definiert.

13. Vorrichtung nach mindestens einem der Ansprüche 8 bis 12, wobei beim Erfassen des Benutzerblicks und Erfassens der Blicktrajektorie die Anweisungen den mindestens einen Prozessor (390) zu Folgendem veranlassen:
Verfolgen eines Benutzerblicks durch ein Augenverfolgungssystem der elektronischen Vorrichtung, einschließend:

Aussenden von Licht in Richtung der Augen des Benutzers durch eine oder mehrere Lichtquellen (361);
Erfassen der Reflexion des von der einen oder den mehreren Lichtquellen ausgesendeten Lichts an den Augen des Benutzers durch einen oder mehrere Lichtsensoren (362); und
Verfolgen des Benutzerblicks basierend auf der erfassten Reflexion.

**14.** Vorrichtung nach mindestens einem der Ansprüche 8 bis 13, wobei der Versatz zwischen der Blicktrajektorie und der Anzeigetrajektorie, die mit dem Ziel-UI-Element assoziiert ist, auf die Bewegung der HMD-Vorrichtung (300) relativ zu den Augen des Benutzers nach einer anfänglichen Kalibrierung der HMD-Vorrichtung (300) zurückzuführen ist.

**15.** Nicht flüchtiges, computerlesbares Medium mit darauf gespeicherten Anweisungen, die, wenn sie durch eine Rechenvorrichtung nach einem der Ansprüche 8 bis 14 ausgeführt werden, die Rechenvorrichtung dazu veranlassen, ein Verfahren nach mindestens einem der Ansprüche 1 bis 7 durchzuführen.

**Revendications**

**1.** Procédé mis en œuvre par ordinateur, comprenant :

la détection (810) du regard d'un utilisateur dirigé vers une interface utilisateur virtuelle affichée sur un dispositif d'affichage d'un dispositif d'affichage monté sur la tête, HMD, (300), l'interface utilisateur virtuelle comportant une pluralité d'éléments d'interface utilisateur virtuelle, dans lequel l'interface utilisateur virtuelle est une interface utilisateur dynamique comportant une pluralité d'éléments dynamiques d'interface utilisateur, chacun de la pluralité d'éléments dynamiques d'interface utilisateur ayant une trajectoire d'affichage respective définissant un modèle de mouvement de l'élément dynamique d'interface utilisateur respectif ;
le fait de déterminer (820) que le regard de l'utilisateur coïncide avec l'un des éléments dynamiques d'interface utilisateur, et, en réponse à la détermination du fait que le regard de l'utilisateur coïncide avec l'un des éléments dynamiques d'interface utilisateur, la définition (880) de l'élément dynamique d'interface utilisateur identifié comme élément d'interface utilisateur cible et la sélection (890) de l'élément dynamique d'interface utilisateur identifié pour une action ultérieure, et, en réponse à la détermination du fait que le regard de l'utilisateur ne coïncide pas avec l'un des éléments dynamiques d'interface utilisateur :

la détection (830) d'une trajectoire du regard correspondant au regard de l'utilisateur détecté ;
la mise en correspondance (850) de la trajectoire du regard détectée à une trajectoire d'affichage associée à un élément d'interface utilisateur de la pluralité d'éléments d'interface utilisateur ;
l'identification de l'élément d'interface utilisateur en tant qu'élément d'interface utilisateur cible ;
la détermination (860) d'un décalage entre la trajectoire du regard et la trajectoire d'affichage associée à l'élément cible d'interface utilisateur, le décalage comportant au moins un décalage parmi un décalage de translation, un décalage de mise à l'échelle ou un décalage de rotation ; et
le réétalonnage (870) d'un mode d'interaction avec le regard de l'utilisateur sur la base du décalage déterminé.

**2.** Procédé selon la revendication 1, dans lequel la détermination (860) du décalage comporte :

la détermination du décalage de translation, comportant :

un premier décalage de translation dans une première direction ; et
un second décalage de translation dans une seconde direction ; et

la détermination du décalage de mise à l'échelle, comportant :

une compression ou une expansion dans la première direction ; et
une compression ou une expansion dans la seconde direction.

**3.** Procédé selon la revendication 2, dans lequel le réétalonnage (870) du mode d'interaction avec le regard de l'utilisateur comporte la réinitialisation du regard de l'utilisateur détecté avec l'interface utilisateur virtuelle et la pluralité d'éléments d'interface utilisateur pour compenser les premier et second décalages de translation et les premier et second décalages de mise à l'échelle.

**4.** Procédé selon la revendication 1, dans lequel chaque élément dynamique d'interface utilisateur de la pluralité d'éléments dynamiques d'interface utilisateur présente une trajectoire d'affichage unique définissant un modèle de mouvement unique pour l'élément dynamique d'interface utilisateur.

**5.** Procédé selon la revendication 4, dans lequel la trajectoire d'affichage comprend une partie linéaire, une partie circulaire, ou une partie courbe.

**6.** Procédé selon la revendication 4, dans lequel chaque élément dynamique d'interface utilisateur de la pluralité d'éléments dynamiques d'interface utilisateur présente une trajectoire d'affichage pseudo-aléatoire définissant un modèle de mouvement pseudo-aléatoire pour l'élément dynamique d'interface utilisateur.

**7.** Procédé selon au moins l'une des revendications 1 à 6, dans lequel la détection du regard de l'utilisateur et la détection de la trajectoire du regard comportent :

le suivi, par un système de suivi oculaire du dispositif HMD (300), du regard d'un utilisateur ; et
la détection de la trajectoire du regard sur la base du regard de l'utilisateur suivi par rapport à l'interface utilisateur virtuelle et à la pluralité d'éléments d'interface utilisateur, dans lequel le suivi du regard de l'utilisateur comporte éventuellement :

l'émission, par une ou plusieurs sources de lumière (361) du dispositif HMD (300), de la lumière vers les yeux de l'utilisateur ;
la détection, par un ou plusieurs capteurs de lumière (362) du dispositif HMD (300), la réflexion de la lumière, émise par les une ou plusieurs sources de lumière (361), par les yeux de l'utilisateur ; et
le suivi du regard de l'utilisateur sur la base de la réflexion détectée.

**8.** Dispositif électronique, comprenant un dispositif d'affichage monté sur la tête, HMD, (300), comportant :

un écran (355) ;
un système de détection (360) ;
au moins un processeur (390) ; et
une mémoire (380) stockant des instructions qui, lorsqu'elles sont exécutées par l'au moins un processeur (390), amènent le dispositif électronique à :

afficher, par l'affichage (355), une interface utilisateur virtuelle, UI, l'interface utilisateur virtuelle comportant une pluralité d'éléments d'interface utilisateur, dans lequel l'interface utilisateur virtuelle est une interface utilisateur dynamique comportant une pluralité d'éléments dynamiques d'interface utilisateur, chacun de la pluralité d'éléments dynamiques d'interface utilisateur ayant une trajectoire d'affichage respective définissant un modèle de mouvement de l'élément dynamique d'interface utilisateur respectif ;
déterminer que le regard de l'utilisateur coïncide avec l'un des éléments dynamiques d'interface utilisateur, et, en réponse à la détermination du fait que le regard de l'utilisateur coïncide avec l'un des éléments dynamiques d'interface utilisateur, définir (880) l'élément dynamique d'interface utilisateur identifié comme élément d'interface utilisateur cible et sélectionner (890) l'élément dynamique d'interface utilisateur identifié pour une action ultérieure, et, en réponse à la détermination du fait que le regard de l'utilisateur ne coïncide pas avec l'un des éléments dynamiques d'interface utilisateur :

détecter un regard d'utilisateur dirigé vers l'interface utilisateur virtuelle ;
détecter une trajectoire du regard correspondant au regard de l'utilisateur détecté ;
mettre en correspondance la trajectoire du regard détectée à une trajectoire d'affichage associée à un élément d'interface utilisateur de la pluralité d'éléments d'interface utilisateur ; identifier l'élément d'interface utilisateur en tant qu'élément d'interface utilisateur cible ;
déterminer un décalage entre la trajectoire du regard et la trajectoire d'affichage associée à l'élément cible d'interface utilisateur, le décalage comportant au moins un décalage parmi un décalage de translation, un décalage de mise à l'échelle ou un décalage de rotation ; et
réétalonner un mode d'interaction avec le regard de l'utilisateur sur la base du décalage déterminé.

**9.** Dispositif selon la revendication 8, dans lequel, lors de la détermination du décalage, les instructions amènent l'au moins un processeur (390) à :

déterminer le décalage de translation, comportant :

un premier décalage de translation dans une première direction ; et
un second décalage de translation dans une seconde direction ; et

déterminer le décalage de mise à l'échelle, comportant :

une compression ou une expansion dans la première direction ; et
une compression ou une expansion dans la seconde direction.

10. Dispositif selon la revendication 9, dans lequel, lors du réétalonnage du mode d'interaction avec le regard de l'utilisateur, les instructions amènent l'au moins un processeur (390) à réinitialiser le regard de l'utilisateur détecté avec l'interface utilisateur virtuelle et la pluralité d'éléments d'interface utilisateur pour compenser les premier et second décalages de translation et les premier et second décalages de mise à l'échelle.

11. Procédé selon la revendication 8, dans lequel la trajectoire d'affichage comprend une partie linéaire, une partie circulaire, ou une partie courbe.

12. Procédé selon la revendication 8, dans lequel chaque élément dynamique d'interface utilisateur de la pluralité d'éléments dynamiques d'interface utilisateur présente une trajectoire d'affichage pseudo-aléatoire définissant un modèle de mouvement pseudo-aléatoire pour l'élément dynamique d'interface utilisateur.

13. Dispositif selon au moins l'une des revendications 8 à 12, dans lequel, lors de la détection du regard de l'utilisateur et de la détection de la trajectoire du regard, les instructions amènent l'au moins un processeur (390) à :
suivre, au moyen d'un système de suivi oculaire du dispositif électronique, le regard d'un utilisateur, comportant :

l'émission, par une ou plusieurs sources de lumière (361), de la lumière vers les yeux de l'utilisateur ;
la détection, par un ou plusieurs capteurs de lumière (362), de la réflexion de la lumière, émise par les une ou plusieurs sources de lumière, par les yeux de l'utilisateur ; et
le suivi du regard de l'utilisateur sur la base de la réflexion détectée.

14. Dispositif selon au moins l'une des revendications 8 à 13, dans lequel le décalage entre la trajectoire du regard et la trajectoire d'affichage associée à l'élément d'interface utilisateur cible est dû au mouvement du dispositif HMD (300) par rapport aux yeux de l'utilisateur après l'étalonnage initial du dispositif HMD (300).

15. Support non transitoire lisible par ordinateur sur lequel sont stockées des instructions qui, lorsqu'elles sont exécutées par un dispositif informatique selon l'une quelconque des revendications 8 à 14, amènent le dispositif informatique à exécuter un procédé selon au moins l'une des revendications 1 à 7.

FIG. 2

EP 4 097 566 B1

**FIG. 3**

EP 4 097 566 B1

FIG. 4

FIG. 5A

FIG. 5B

EP 4 097 566 B1

EP 4 097 566 B1

600

650A

650B

650H

650C

650G

650D

B

650E

650F

FIG. 6A

FIG. 6B(1)

FIG. 6B(2)

FIG. 6B(3)

FIG. 6B(4)

FIG. 6B(5)

EP 4 097 566 B1

FIG. 6C

FIG. 7A

FIG. 7B

FIG. 7C

EP 4 097 566 B1

FIG. 7D

FIG. 7E

FIG. 7F

FIG. 7G

EP 4 097 566 B1

800

Detect user gaze at a dynamic UI including
a plurality of UI elements
810

Does gaze track
coincide with one of the UI elements?
820

Yes

No

Track gaze trajectory of user gaze
830

Compare user gaze trajectory to known
display trajectories corresponding to
the plurality of UI elements
840

Match user gaze trajectory with
display trajectory of UI element
850

Set matched UI element
as target UI element
880

Determine offsets between user gaze
trajectory and display trajectory of UI element
860

Recalibrate based on determined offsets
870

No

Session terminated?
895

Select UI element
890

Yes

End

FIG. 8

FIG. 9

**EP 4 097 566 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 201414894548 A

**Non-patent literature cited in the description**

- Pursuit calibration: making gaze calibration less tedious and more flexible. **KEN PFEUFFER ; MELODIE VIDAL ; JAYSON TURNER ; ANDREAS BULLING ; HANS GELLERSEN.** Proceedings of the 26th annual ACM symposium on User interface software and technology (UIST '13). Association for Computing Machinery, 2013, 261-270
- **EDUARDO VELLOSO ; MARCUS CARTER ; JOSHUA NEWN ; AUGUSTOESTEVES ; CHRISTOPHER CLARKE ; HANS GELLERSEN.** Motion Correlation: Selecting Objects by Matching Their Movement. *ACM Trans. Comput.-Hum. Interact.,* June 2017, vol. 24 (3), 35, https://doi.org/10.1145/3064937OL

- Pursuits: spontaneous interaction with displays based on smooth pursuit eye movement and moving targets. **MÉLODIE VIDAL ; ANDREAS BULLING ; HANS GELLERSEN.** Proceedings of the 2013 ACM international joint conference on Pervasive and ubiquitous computing (UbiComp '13). Association for Computing Machinery, 2013, 439-448